(19) **Europäisches Patentamt / European Patent Office / Office européen des brevets**

(11) **EP 4 101 883 A1**

(12) # EUROPEAN PATENT APPLICATION

(43) Date of publication:
**14.12.2022 Bulletin 2022/50**

(21) Application number: **21179060.5**

(22) Date of filing: **11.06.2021**

(51) International Patent Classification (IPC):
**C08K 5/00** *(2006.01)*     **C08L 67/02** *(2006.01)*

(52) Cooperative Patent Classification (CPC):
(C-Sets available)
**C08K 5/0066; C08L 67/02;** C08K 2201/019  (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
• **BIHARI, Malvika**
  **Mt. Vernon (US)**
• **VOLLENBERG, Peter**
  **Selkirk (US)**

(74) Representative: **Dehns**
**St. Bride's House**
**10 Salisbury Square**
**London EC4Y 8JD (GB)**

(54) **SUSTAINABLE FLAME RETARDANT GLASS-FILLED POLYESTER COMPOSITIONS**

(57)     A thermoplastic composition includes: a polyester component; a glass fiber filler; and up to 15 wt% of a flame retardant component. The composition includes less than 1 wt% of a component including nitrogen. The composition is sustainable in some aspects with a recycle content of at least 30%.

EP 4 101 883 A1

**(Cont. next page)**

(52) Cooperative Patent Classification (CPC): (Cont.)

C-Sets
**C08K 5/0066, C08L 67/02;
C08L 67/02, C08L 67/02, C08L 67/02,
C08L 27/18, C08L 25/12, C08K 7/14,
C08K 5/5313, C08K 3/346**

**Description**

**FIELD OF THE DISCLOSURE**

The present disclosure relates to sustainable thermoplastic compositions including polyester and a non-nitrogen based flame retardant component.

**BACKGROUND OF THE DISCLOSURE**

Many consumer electronics companies are moving towards use of safer chemicals and sustainable components. One method of evaluating sustainability is by determining the GreenScreen® score of the component. Information regarding GreenScreen® scores is available at https://www.greenscreenchemicals.org/learn. For flame retardant (FR) polymer compositions it can be difficult to identify FR additives with a GreenScreen® score of 3 or higher. Polyester compositions such as polybutylene terephthalate (PBT) or polyethylene terephthalate (PET) are not flame retardant; to impart FR properties nitrogen-based FR agents or synergists such as melamine polyphosphate are used. Melamine polyphosphate has a GreenScreen® score of 2. For sustainable compositions, however, all components in the composition must have a GreenScreen® score of at least 3. While some FR agents such as Bisphenol A bis(diphenyl phosphate) (BPADP) have a GreenScreen® score of 3 or higher, compositions including them cannot achieve a desired UL-94 rating of V-0 below 1.2 millimeter (mm).

These and other shortcomings are addressed by aspects of the present disclosure.

**SUMMARY**

Aspects of the disclosure relate to thermoplastic compositions including: a polyester component; a glass fiber filler; and up to 15 wt% of a flame retardant component. The composition includes less than 1 wt% of a component including nitrogen.

**DETAILED DESCRIPTION**

The present disclosure can be understood more readily by reference to the following detailed description of the disclosure and the Examples included therein. In various aspects, the present disclosure pertains to glass-filled polyester (e.g., PBT/PET) FR compositions that have a high sustainability content (e.g., GreenScreen® score). The compositions may be suitable for use in consumer electronics applications such as laptop and desktop parts.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyester" includes mixtures of two or more polyester polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\ 2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, "polyester" refers to a polymer containing an ester functional group in the backbone of the polymer.

As used herein, "polybutylene terephthalate" can be used interchangeably with poly(1,4-butylene terephthalate). Polybutylene terephthalate is one type of polyester. Polyesters, which include poly(alkylene dicarboxylates), liquid crystalline polyesters, and polyester copolymers, can be useful in the disclosed thermoplastic compositions of the present disclosure.

As used herein, "polyethylene terephthalate" can be used interchangeably with poly(ethyl benzene-1,4-dicarboxylate). As with polybutylene terephthalate, polyethylene terephthalate is a type of polyester.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

The present disclosure relates to semi-crystalline glass filled flame retardant compositions having a flame rating of V-0 at 0.8 mm thickness and a GreenScreen® benchmark score of at least 3. GreenScreen® for Safer Chemicals is a globally recognized tool that identifies hazardous chemicals and safer alternatives. Specific aspects of the disclosure related to PBT and PET blends including glass fiber and a FR component that does not include nitrogen. The PBT can be sourced from ocean-bound (recycled) PBT and/or PET. Compositions according to aspects of the disclosure may have a sustainable content of up to 40% or potentially even more if a bio-derived monomer is used. In PET-based compositions, as the loading of PET increases from 15% to 45% FR performance becomes robust. At 15% PET loading, a UL-94 V-0 rating is not achieved at a 0.8 mm thickness. But as PET loading increases to 20%, V-0 rating at 0.8 mm thickness is achieved without the use of a nitrogen-based flame retardant component such as melamine polyphosphate.

GreenScreen® for Safer Chemicals is a method for chemical hazard assessment designed to identify chemicals of high concern and safer alternatives. It is used by industry, government and non-governmental organizations (NGOs) to support product design and development, materials procurement, and as part of alternatives assessment to meet regulatory requirements. Each chemical evaluated under GreenScreen® is assigned a Benchmark between 1 and 4, with each increasing Benchmark defining progressively safer chemicals. The Benchmark score is determined by analyzing specific combinations of hazard classifications for the 18 endpoints included in GreenScreen®. The Benchmark criteria were developed to reflect hazard concerns that have been established by governments nationally and internationally. An important value of GreenScreen is that Benchmark-1, "Avoid - Chemical of High Concern," clearly defines the criteria for chemicals of high concern to human health and the environment consistent with global regulations like REACH. Benchmark-1 chemicals include: carcinogens, reproductive, developmental and neurodevelopmental toxicants, mutagens, persistent, bioaccumulative and toxic chemicals (PBTs), very persistent and bioaccumulative chemicals (vPvBs), and endocrine disruptors.

FR agents and synergists including nitrogen such as melamine polyphosphate have a GreenScreen® score of 2. In contrast, aluminum diethyl phosphinate has a GreenScreen® score of 3. Many consumer electronics companies are moving towards use of safer chemicals and sustainability. A GreenScreen® score of 3 or higher is preferred for FR agents used in formulations.

In particular aspects the disclosure relates to thermoplastic compositions including: a polyester component; a glass fiber filler; and up to 15 wt% of a flame retardant component. The composition includes less than 1 wt% of a component including nitrogen.

Suitable polyester components include, but are not limited to, polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof. PCT is a crystalline polyester formed from cyclohexanedimethanol (CHDM) and either dimethyl terephthalate (DMT) or terephthalic acid (TPA). PETG and PCTG are copolyesters formed by including ethylene glycol (EG) in the polymerization reaction. PETG is formed if less than 50% of the diol content in the copolyester is CHDM; PCTG is formed if greater than 50% of the diol content in the copolyester is CHDM. PCTA is formed by including additional diacids such as isophthalic acid (IPA). In a particular aspect the polyester component includes PBT, PET, or a combination thereof.

In some aspects the polyester component includes a monomer derived from a petrochemical source, a post-consumer or post-industrial recycled source, a bio-based source, or a combination thereof.

In certain aspects the composition includes from 10 wt% to 50 wt% glass fiber filler. The glass fiber filler may be virgin glass fiber or may be derived from recycled sources. Recycled glass fiber may be post-consumer or post-industrial recycled glass fiber.

The flame retardant compound may in some aspects include a phosphinate compound. An exemplary phosphinate compound is aluminum diethyl phosphinate. An exemplary aluminum diethyl phosphinate Exolit® OP 1240, available from Clariant, which is indicated as being a sustainable flame retardant product.

In further aspects the composition includes a clay additive. The composition may include from 0.001 wt% to 2 wt% of the clay additive. An exemplary clay additive suitable for aspects of the disclosure includes aluminosilicate.

In certain aspects the composition includes a styrene acrylonitrile (SAN)-encapsulated polytetrafluoroethylene (PTFE) polymer. The SAN-PTFE polymer may be present in the composition in an amount of from 0.05 wt% to 1 wt% in some aspects.

Compositions according to aspects of the disclosure may further include at least one additional additive. Suitable additional additives include, but are not limited to, a filler, acid scavenger, anti-drip agent, antioxidant, antistatic agent, chain extender, colorant, de-molding agent, flow promoter, lubricant, mold release agent, plasticizer, quenching agent, flame retardant, UV reflecting additive, and combinations thereof. The at least one additional additive may be included in the thermoplastic composition in any amount that will not significantly adversely affect the desired properties of the composition. In specific aspects the at least one additional additive includes less than 1 wt% of a component including nitrogen.

The composition includes less than 1 wt% of a component including nitrogen. Inclusion of 1 wt% or more of a component including nitrogen reduces the sustainability of the composition and prevents the composition from having a GreenScreen® score of at least 3. In particular aspects the composition does not include melamine.

In some aspects the composition has a post-consumer or post-industrial recycle content of at least 30%. In further aspects the composition has a post-consumer or post-industrial recycle content of at least 35%, or at least 40%, at least 45%, or from 30-60%, or from 35-60%, or from 40-60%.

Compositions according to aspects of the disclosure have improved properties as compared to conventional flame retardant polyester compositions.

In some aspects the composition has a UL94 rating of V-0 at a thickness of less than 1.2 millimeter (mm), or a UL94 rating of V-0 at a thickness of less than 1.0 mm, or a UL94 rating of V-0 at a thickness of 0.8 mm.

In further aspects the composition has one or more of: a tensile modulus of at least 9,000 megapascals (MPa) as determined in accordance with ASTM D638; a tensile strength of at least 90 MPa as determined in accordance with ASTM D638; and an elongation at break of greater than 1% at determined in accordance with ASTM D638.

In particular aspects the composition has a notched Izod impact strength at 23 °C of at least 45 joules per meter (J/m) as determined in accordance with ASTM D256 using a pendulum energy of 2.75 J. In further aspects the composition has a notched Izod impact strength at 23 °C of at least 50 J/m, or at least 55 J/m, or at least 60 J/m, or at least 65 J/m, as determined in accordance with ASTM D256 using a pendulum energy of 2.75 J.

Compositions according to aspects of the disclosure may have a heat distortion temperature (HDT) at 0.45 MPa of at least 170 °C as determined in accordance with ASTM D648, or a HDT at 0.45 MPa of at least 180 °C, or at least 190 °C, or at least 200 °C, or at least 210 °C, as determined in accordance with ASTM D648.

In some aspects the composition has a difference in HDT at 0.45 MPa and at 1.82 MPa, as determined in accordance with ASTM D648, of less than 100 °C. In certain aspects the composition has a difference in HDT at 0.45 MPa and at 1.82 MPa, as determined in accordance with ASTM D648, of less than 75 °C, or less than 50 °C, or less than 25 °C, or less than 20 °C.

## Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In particular aspects the article is a housing or enclosure for a consumer electronics application. In further aspects the article is a fan housing or a fan blade for a consumer electronics application.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

a polyester component;
a glass fiber filler; and
up to 15 wt% of a flame retardant component,
wherein the composition comprises less than 1 wt% of a component comprising nitrogen.

Aspect 2. The thermoplastic composition according to Aspect 1, wherein the polyester component comprises polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof.

Aspect 3. The thermoplastic composition according to Aspect 2, wherein the polyester component comprises PBT, PET, or a combination thereof.

Aspect 4. The thermoplastic composition according to any of Aspects 1 to 3, wherein the polyester component comprises a monomer derived from a petrochemical source, a post-consumer recycled source, a bio-based source, or a combination thereof.

Aspect 5. The thermoplastic composition according to any of Aspects 1 to 4, wherein the composition comprises from 10 wt% to 50 wt% glass fiber filler, and wherein the glass fiber filler is virgin glass fiber or is derived from recycled sources.

Aspect 6. The thermoplastic composition according to any of Aspects 1 to 5, wherein the flame retardant component comprises a phosphinate compound.

Aspect 7. The thermoplastic composition according to Aspect 6, wherein the phosphinate compound comprises aluminum diethyl phosphinate.

Aspect 8. The thermoplastic composition according to any of Aspects 1 to 7, wherein the composition further comprises up to 2 wt% of a clay additive.

Aspect 9. The thermoplastic composition according to any of Aspects 1 to 8, wherein the composition further comprises from 0.05 wt% to 1 wt% of a styrene acrylonitrile (SAN)-encapsulated polytetrafluoroethylene (PTFE) polymer.

Aspect 10. The thermoplastic composition according to any of Aspects 1 to 9, wherein the composition further comprises up to 5 wt% of at least one additional additive, wherein the at least one additional additive comprises less than 1 wt% of a component comprising nitrogen.

Aspect 11. The thermoplastic composition according to any of Aspects 1 to 10, wherein the composition does not comprise melamine.

Aspect 12. The thermoplastic composition according to any of Aspects 1 to 11, wherein the composition has a UL94 rating of V-0 at a thickness of 0.8 millimeter (mm).

Aspect 13. The thermoplastic composition according to any of Aspects 1 to 12, wherein the composition has one or more of the following properties:

a tensile modulus of at least 9,000 megapascals (MPa) as determined in accordance with ASTM D638;
a tensile strength of at least 90 MPa as determined in accordance with ASTM D638; or
an elongation at break of greater than 1% at determined in accordance with ASTM D638.

Aspect 14. The thermoplastic composition according to any of Aspects 1 to 13, wherein the composition has a notched Izod impact strength at 23 °C of at least 45 joules per meter (J/m) as determined in accordance with ASTM D256 using a pendulum energy of 2.75 J.

Aspect 15. The thermoplastic composition according to any of Aspects 1 to 14, wherein the composition (1) has a heat distortion temperature (HDT) at 0.45 MPa of at least 170 °C as determined in accordance with ASTM D648; or (2) has a difference in HDT at 0.45 MPa and at 1.82 MPa, as determined in accordance with ASTM D648, of less than 100 °C.

Aspect 16. The thermoplastic composition according to any of Aspects 1 to 15, wherein the composition has a recycle content of at least 30%.

Aspect 17. An article formed from the thermoplastic composition according to any of Aspects 1 to 16.

Aspect 18. The article according to Aspect 17, wherein the article is a housing or enclosure for a consumer electronics application.

Aspect 19. The article according to Aspect 17, wherein the article is a fan housing or a fan blade for a consumer electronics application.

# EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Various compositions were prepared to identify a glass-filled PBT/PET blend with flame retardant properties and a GreenScreen® benchmark score of 3 or higher for applications in laptop and desktop parts. Table 1 lists the components included in the compositions:

**Table 1 - Materials Used**

| Component | Description | Source |
|---|---|---|
| PBT195 | Valox™ 195 low molecular weight PBT resin | SABIC |
| PBT315 | Valox™ 315 high molecular weight PBT resin | SABIC |
| PET | PET, CAS # 25038-59-9 Intrinsic Viscosity: 0.84 dl/g | DAK |
| Melamine Polyphosphate | FR additive | Budenheim Iberica Comercial SA |
| AlPi | Aluminum diethylphosphinate, FR additive | Clariant Chemicals |
| GF | Glass fiber, standard 10 micron PBT | Nippon Electric Glass |
| Clay | Translink® 445 aluminosilicate | BASF |
| TSAN | Cycolac™ Resin INP449 TSAN | SABIC |
| PETS | Pentaerythrityl Tetrastearate, mold release | Faci |
| Aox1010 | Hindered phenol stabilizer (antioxidant) | BASF |
| CB | Carbon black, medium color, beads | Cabot |

Comparative and example compositions formed are shown in Tables 2A and 2B (all amounts are in wt% of 100 wt%):

**Table 2A - Compositions Formed**

| | C1 | Ex1.1 | Ex1.2 | Ex1.3 | Ex1.4 |
|---|---|---|---|---|---|
| PBT195 | 19 | 19.56 | 17.08 | 14.58 | 9.58 |
| PBT315 | 20.16 | 19.6 | 17.08 | 14.58 | 9.58 |
| PET | 15 | 15 | 20 | 25 | 35 |
| Melamine phosphate | 4 | | | | |
| AlPi | 10 | 14 | 14 | 14 | 14 |
| GF | 30 | 30 | 30 | 30 | 30 |
| Clay | | | | | |
| TSAN | 0.5 | 0.5 | 0.5 | 0.5 | 0.5 |
| PETS | 0.2 | 0.2 | 0.2 | 0.2 | 0.2 |
| Aox1010 | 0.15 | 0.15 | 0.15 | 0.15 | 0.15 |
| CB | 0.99 | 0.99 | 0.99 | 0.99 | 0.99 |
| Total (wt%): | 100 | 100 | 100 | 100 | 100 |

**Table 2B - Compositions Formed**

| | Ex1.5 | Ex1.6 | Ex1.7 | Ex1.8 | Ex1.9 |
|---|---|---|---|---|---|
| PBT195 | 19.56 | 17.08 | 14.58 | 9.58 | 6 |
| PBT315 | 19.6 | 17.08 | 14.58 | 9.58 | 7.16 |
| PET | 15 | 20 | 25 | 35 | 45 |
| Melamine phosphate | | | | | |
| AlPi | 13 | 13 | 13 | 13 | 10 |
| GF | 30 | 30 | 30 | 30 | 30 |
| Clay | 1 | 1 | 1 | 1 | |
| TSAN | 0.5 | 0.5 | 0.5 | 0.5 | 0.5 |
| PETS | 0.2 | 0.2 | 0.2 | 0.2 | 0.2 |
| Aox1010 | 0.15 | 0.15 | 0.15 | 0.15 | 0.15 |
| CB | 0.99 | 0.99 | 0.99 | 0.99 | 0.99 |
| Total (wt%): | 100 | 100 | 100 | 100 | 100 |

Properties of the compositions are shown in Tables 3A and 3B:

**Table 3A - Properties of Table 2 Compositions**

| | C1 | Ex1.1 | Ex1.2 | Ex1.3 | Ex1.4 |
|---|---|---|---|---|---|
| Tensile Modulus (MPa) | 12100 | 11300 | 11200 | 11100 | 11060 |
| Tensile Strength (MPa) | 101 | 109 | 112 | 112 | 118 |
| Elongation at Break (%) | 1.4 | 1.6 | 1.7 | 1.5 | 2.2 |
| Izod Impact Strength, notched (J/m) | 71.2 | 62.5 | 63.6 | 61.6 | 66.8 |
| HDT °C (0.45 MPa) | 220 | 207 | 193 | 181 | 214 |
| HDT °C (1.82 MPa) | 202 | 187 | 171 | 170 | 150 |
| UL94 (0.8mm thickness) | Fail | V-0 | V-0 | V-0 | V-0* |
| Total Flame Time (23 °C/48 hours) | 25.4 | 31.8 | 29.6 | 33.4 | 21.5* |
| Total Flame Time (70 °C/168 hours) | 48.5 | 42.8 | 32.9 | 35.1 | 23.2 |
| Recycle % (theoretical) | 38.5 | 38.5 | 40.5 | 42.5 | 46.5 |

**Table 3B - Properties of Table 2 Compositions**

| | Ex1.5 | Ex1.6 | Ex1.7 | Ex1.8 | Ex1.9 |
|---|---|---|---|---|---|
| Tensile Modulus (MPa) | 11040 | 10880 | 10740 | 11120 | 11200 |
| Tensile Strength (MPa) | 101 | 99.9 | 106 | 105 | 106 |
| Elongation at Break (%) | 1.4 | 1.3 | 2.0 | 1.7 | 1.8 |
| Izod Impact Strength, notched (J/m) | 47.2 | 49.1 | 52.0 | 50.2 | 53.1 |
| HDT °C (0.45 MPa) | 196 | 197 | 211 | 211 | 206 |
| HDT °C (1.82 MPa) | 179 | 174 | 181 | 137 | 82.7 |
| UL94 (0.8 mm thickness) | V-0 | V-0 | V-0* | V-0* | V-0 |
| Total Flame Time (23 °C/48 hours) | 34.9 | 32.4 | 29.8* | 22.4* | 25.9 |
| Total Flame Time (70 °C/168 hours) | 38.6 | 25.3 | 31.6 | 24.1 | 34.8 |

(continued)

|  | Ex1.5 | Ex1.6 | Ex1.7 | Ex1.8 | Ex1.9 |
|---|---|---|---|---|---|
| Recycle % (theoretical) | 38.5 | 40.5 | 42.5 | 46.5 | 53 |

Virgin PBT and PET were used for screening purposes; theoretical recycle content if recycled PBT and PET were used is provided in Tables 3A and 3B.

Tensile modulus (megapascals, MPa), tensile strength (MPa) and elongation at break (%) were determined in accordance with ASTM D638 at a speed of 50 millimeters per minute (mm/min). Notched Izod impact strength (joules per meter, J/m) was determined at room temperature (23 °C) in accordance with ASTM D256 with a pendulum energy of 2.75 J. Heat distortion temperature was determined in accordance with ASTM D648 at 0.45 MPa and 1.82 MPa. UL94 flame rating was determined at a 0.8 millimeter (mm) or 0.75 mm thickness. Flame time was determined in accordance with UL94 standards.

As evidenced from the data, control composition C1 does not satisfy the UL94 test at 0.8 mm thickness. This grade has a rating of V-0 at a thickness of 1.5 mm (per the technical datasheet). Example compositions having a PET loading of from 20% to 45% have a UL94 V-0 rating at a 0.8 mm thickness. The example formulations do not include a melamine compound (melamine polyphosphate) synergist, which as a GreenScreen® score of 2. Addition of 1% clay to the formulations (compositions Ex1.5-Ex1.8) does not affect the flame rating. However, impact performance is lowered by the addition of clay.

Further evaluations were made using ocean-bound iQ PBT (from SABIC) with a recycled PET loading of 20 and 25 wt% to achieve an optimal balance of flow and HDT. The compositions are shown in Table 4; properties are shown in Table 5:

**Table 4 - Example Compositions**

|  | Ex2.2 | Ex2.3 |
|---|---|---|
| iQ PBT 195 OB (ocean-bound) | 17.08 | 14.58 |
| iQ PBT 3150B | 17.08 | 14.58 |
| rPET (Ocean PCR Recycle PET) | 20 | 25 |
| TSAN | 0.5 | 0.5 |
| PETS | 0.2 | 0.2 |
| Aox1010 | 0.15 | 0.15 |
| AlPi | 14 | 14 |
| GF | 30 | 30 |
| CB | 0.99 | 0.99 |

**Table 5 - Properties of Table 4 Compositions**

|  | Ex2.2 | Ex2.3 | Ex1.2 | Ex1.3 |
|---|---|---|---|---|
| Tensile Modulus (MPa) | 11140 | 11080 | 11200 | 11100 |
| Tensile Strength (MPa) | 107 | 98.3 | 112 | 112 |
| Elongation at Break (%) | 1.54 | 1.35 | 1.7 | 1.5 |
| Izod Impact Strength, notched (J/m) | 58.9 | 64.4 | 63.6 | 61.6 |
| HDT °C (0.45 MPa) | 206 | 201 | 193 | 181 |
| HDT °C (1.82 MPa) | 183 | 174 | 171 | 170 |
| MVR (260 °C/2.16Kg), $cm^3$/10 min | 3.62 | 2.33 | 1.4 | 1.3 |
| MVR (265 °C/5Kg), $cm^3$/10 min | 28.4 | 25.9 | 14.6 | 12.2 |
| MVR (250 °C/5Kg), $cm^3$/10 min | 26.3 | 20 | 9.0 | 8.3 |

(continued)

|  | Ex2.2 | Ex2.3 | Ex1.2 | Ex1.3 |
|---|---|---|---|---|
| UL94 (0.8 mm thickness) | V-0 | V-0 | V-0 | V-0 |
| Total Flame Time (23 °C/48 hours) | 23.4 | 24.4 | 29.6 | 33.4 |
| Total Flame Time (70 °C/168 hours) | 24.8 | 28.6 | 32.9 | 35.1 |
| Recycle % | 40.5 | 42.5 | 40.5* | 42.5* |
| * theoretical | | | | |

Compositions Ex2.2 and Ex2.3 correspond to compositions Ex1.2 and Ex1.3, respectively. The properties of the Ex1.2 and Ex1.3 compositions are provided for comparison. As shown in Table 5, there was no significant difference in mechanical properties are observed using recycled PBT and PET as compared to virgin PBT and PET. Flow is slightly higher for formulations with recycled materials, presumably because the recycled PET had an intrinsic viscosity of ~ 0.6 where the virgin PET had an intrinsic viscosity of ~ 0.8.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

**Claims**

1.  A thermoplastic composition comprising:

    a polyester component;
    a glass fiber filler; and
    up to 15 wt% of a flame retardant component,
    wherein the composition comprises less than 1 wt% of a component comprising nitrogen.

2.  The thermoplastic composition according to claim 1, wherein the polyester component comprises polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof.

3.  The thermoplastic composition according to claim 2, wherein the polyester component comprises PBT, PET, or a combination thereof.

4.  The thermoplastic composition according to any of claims 1 to 3, wherein the polyester component comprises a monomer derived from a petrochemical source, a post-consumer recycled source, a bio-based source, or a combination thereof.

5.  The thermoplastic composition according to any of claims 1 to 4, wherein the composition comprises from 10 wt% to 50 wt% glass fiber filler, and wherein the glass fiber filler is virgin glass fiber or is derived from recycled sources.

6.  The thermoplastic composition according to any of claims 1 to 5, wherein the flame retardant component comprises aluminum diethyl phosphinate.

7. The thermoplastic composition according to any of claims 1 to 6, wherein the composition further comprises up to 2 wt% of a clay additive.

8. The thermoplastic composition according to any of claims 1 to 7, wherein the composition further comprises from 0.05 wt% to 1 wt% of a styrene acrylonitrile (SAN)-encapsulated polytetrafluoroethylene (PTFE) polymer.

9. The thermoplastic composition according to any of claims 1 to 8, wherein the composition does not comprise melamine.

10. The thermoplastic composition according to any of claims 1 to 9, wherein the composition has a recycle content of at least 30%.

11. The thermoplastic composition according to any of claims 1 to 10, wherein the composition has a UL94 rating of V-0 at a thickness of 0.8 millimeter (mm).

12. The thermoplastic composition according to any of claims 1 to 11, wherein the composition has one or more of the following properties:

a tensile modulus of at least 9,000 megapascals (MPa) as determined in accordance with ASTM D638;
a tensile strength of at least 90 MPa as determined in accordance with ASTM D638; or
an elongation at break of greater than 1% at determined in accordance with ASTM D638.

13. The thermoplastic composition according to any of claims 1 to 12, wherein the composition has a notched Izod impact strength at 23 °C of at least 45 joules per meter (J/m) as determined in accordance with ASTM D256 using a pendulum energy of 2.75 J.

14. The thermoplastic composition according to any of claims 1 to 13, wherein the composition (1) has a heat distortion temperature (HDT) at 0.45 MPa of at least 170 °C as determined in accordance with ASTM D648; or (2) has a difference in HDT at 0.45 MPa and at 1.82 MPa, as determined in accordance with ASTM D648, of less than 100 °C.

15. An article formed from the thermoplastic composition according to any of claims 1 to 14, wherein the article is a fan housing or a fan blade for a consumer electronics application.

Europäisches
Patentamt
European
Patent Office
Office européen
des brevets

# EUROPEAN SEARCH REPORT

Application Number

EP 21 17 9060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/038074 A1 (SABIC INNOVATIVE PLASTICS IP [NL]; DING TIANHUA [US] ET AL.) 31 March 2011 (2011-03-31)<br>* paragraphs [0039], [0058] *<br>* table 5 *<br>----- | 1-15 | INV.<br>C08K5/00<br>C08L67/02 |
| X | WO 2020/109967 A1 (SABIC GLOBAL TECHNOLOGIES BV [NL])<br>4 June 2020 (2020-06-04) | 1-14 | |
| A | * paragraphs [0039], [0043], [0049] *<br>* examples A,B,G,H,I,J; tables 3,4 *<br>----- | 15 | |
| X | KR 2013 0021502 A (LG CHEMICAL LTD [KR])<br>6 March 2013 (2013-03-06) | 1-14 | |
| A | * paragraphs [0001], [0004], [0049] *<br>* example comp 2; table 2 *<br>----- | 15 | |
| X | Clariant Clariant: "EXOLIT® FLAME RETARDANTS FOR THERMOPLASTICS",<br>,<br>31 December 2013 (2013-12-31),<br>XP055551436,<br>Retrieved from the Internet:<br>URL:https://nanopdf.com/download/exolit-op-1230_pdf<br>[retrieved on 2019-02-04] | 1-14 | |
| A | * page 6 *<br>* page 16; table "PET formulations" *<br>----- | 15 | |

TECHNICAL FIELDS
SEARCHED      (IPC)

C09J
C08K
C08L

| | | | |
|---|---|---|---|
| The present search report has been drawn up for all claims | | | |
| Place of search<br>**Munich** | Date of completion of the search<br>**6 December 2021** | | Examiner<br>**Behm, Sonja** |

## ANNEX TO THE EUROPEAN SEARCH REPORT
## ON EUROPEAN PATENT APPLICATION NO.

EP 21 17 9060

06-12-2021

| Patent document cited in search report | | Publication date | Patent family member(s) | | | Publication date |
|---|---|---|---|---|---|---|
| WO 2011038074 | A1 | 31-03-2011 | CN | 102597090 | A | 18-07-2012 |
| | | | EP | 2480601 | A1 | 01-08-2012 |
| | | | KR | 20120085250 | A | 31-07-2012 |
| | | | US | 2011071240 | A1 | 24-03-2011 |
| | | | WO | 2011038074 | A1 | 31-03-2011 |
| WO 2020109967 | A1 | 04-06-2020 | EP | 3659676 | A1 | 03-06-2020 |
| | | | WO | 2020109967 | A1 | 04-06-2020 |
| KR 20130021502 | A | 06-03-2013 | NONE | | | |

EPO FORM P0459